(19) Europäisches Patentamt
European Patent Office
Office européen des brevets

(11) **EP 1 209 761 B1**

(12) **EUROPEAN PATENT SPECIFICATION**

(45) Date of publication and mention of the grant of the patent:
**06.08.2008 Bulletin 2008/32**

(51) Int Cl.:
*H01Q 25/00* (2006.01)    *H04B 7/08* (2006.01)
*H04B 1/707* (2006.01)

(21) Application number: **00938466.0**

(22) Date of filing: **22.06.2000**

(86) International application number:
**PCT/CN2000/000169**

(87) International publication number:
**WO 2001/011723 (15.02.2001 Gazette 2001/07)**

(54) **BASEBAND PROCESSING METHOD BASED ON SMART ANTENNA AND INTERFERENCE CANCELLATION**

VERFAHREN ZUR BASISBANDVERARBEITUNG, BASIEREND AUF INTELLIGENTER ANTENNE UND INTERFERENZAUSLÖSCHUNG

PROCEDE DE TRAITEMENT DE LA BANDE DE BASE FAISANT INTERVENIR UNE ANTENNE INTELLIGENTE ET L'ANNULATION DES INTERFERENCES

(84) Designated Contracting States:
**AT BE CH CY DE DK ES FI FR GB GR IE IT LI LU MC NL PT SE**

(30) Priority: **10.08.1999 CN 99111349**

(43) Date of publication of application:
**29.05.2002 Bulletin 2002/22**

(73) Proprietor: **China Academy of Telecommunications Technology, MII**
**Haidian District,**
**Beijing 100083 (CN)**

(72) Inventor: **LI, Feng**
**Haidian District,Beijing 100083 (CN)**

(74) Representative: **Mounteney, Simon James et al**
**Marks & Clerk**
**90 Long Acre**
**London WC2E 9RA (GB)**

(56) References cited:
EP-A- 0 647 979        EP-A- 0 849 888
WO-A-95/22210          CN-A- 1 220 562
CN-C- 1 053 313        DE-A- 19 639 414

• ISHII N ET AL: "Multiuser space-time interference cancellation system for CDMA mobile communications" VEHICULAR TECHNOLOGY CONFERENCE, 1999. VTC 1999 - FALL. IEEE VTS 50TH AMSTERDAM, NETHERLANDS 19-22 SEPT. 1999, PISCATAWAY, NJ, USA,IEEE, US, 19 September 1999 (1999-09-19), pages 1855-1859, XP010353279 ISBN: 0-7803-5435-4
• XU B ET AL: "Effective interference cancellation scheme based on smart antennas" ELECTRONICS LETTERS, IEE STEVENAGE, GB, vol. 33, no. 13, 19 June 1997 (1997-06-19), pages 1114-1116, XP006007638 ISSN: 0013-5194
• BAIER P W: "A critical review of CDMA" VEHICULAR TECHNOLOGY CONFERENCE, 1996. MOBILE TECHNOLOGY FOR THE HUMAN RACE., IEEE 46TH ATLANTA, GA, USA 28 APRIL-1 MAY 1996, NEW YORK, NY, USA,IEEE, US, 28 April 1996 (1996-04-28), pages 6-10, XP010162337 ISBN: 0-7803-3157-5
• BOUKALOV A ET AL: "System aspects of smart antennas technology in cellular wireless communications" RADIO AND WIRELESS CONFERENCE, 1999. RAWCON 99. 1999 IEEE DENVER, CO, USA 1-4 AUG. 1999, PISCATAWAY, NJ, USA,IEEE, US, 1 August 1999 (1999-08-01), pages 17-22, XP010365187 ISBN: 0-7803-5454-0

- GRANT P M ET AL: "Antenna arrays for cellular CDMA systems" SPREAD SPECTRUM TECHNIQUES AND APPLICATIONS, 1998. PROCEEDINGS., 1998 IEEE 5TH INTERNATIONAL SYMPOSIUM ON SUN CITY, SOUTH AFRICA 2-4 SEPT. 1998, NEW YORK, NY, USA,IEEE, US, 2 September 1998 (1998-09-02), pages 404-410, XP010307586 ISBN: 0-7803-4281-X

**Description**

<u>**Field of the Technology**</u>

The present invention relates generally to a interference signal cancellation technology used in base station of wireless communication system with smart antenna, and more particularly to a baseband processing method based on smart antenna and interference cancellation.

<u>**Background of the Invention**</u>

In modern wireless communication system, especially in CDMA wireless communication system, in order to raise system capacity, to raise system sensitivity and to have farther communication distance with lower emission power, smart antenna is used, in general.

In the Chinese patent named "Time Division Duplex Synchronous Code Division Multiple Access Wireless Communication System with Smart Antenna" (CN 97 1 04039.7), a base station structure of wireless communication system with smart antenna is disclosed. It includes antenna array consisted of one or plural antenna units, corresponding radio frequency feeder cables and a set of coherent radio frequency transceivers. According to each antenna unit's different response to signal, coming from user terminals, baseband processor gets space characteristic vector and direction of arrival (DOA) of the signal; then with correspondence algorithm, receiving antenna beam forming is implemented. Among them, any antenna unit, corresponding feeder cable and coherent radio frequency transceiver together is called a link. By using weight, getting from up link receiving beam forming of each link, for down link transmitting beam forming, whole functionality of smart antenna can be implemented, under symmetrical wave propagation condition.

The main part of modern wireless communication system is mobile communication. As mobile communication is working at a complex and variable environment (reference to ITU proposal M1225), severe influences of time-varying and multipath propagation have to be considered. In the patent said above and many disclosing technical documents concerning about beam forming algorithm of smart antenna, the conclusion is more functionality will be with more algorithm complexity. Nevertheless, under mobile communication environment, beam forming must be completed in real time, and algorithm-completed time is microsecond level. As limitation of modern microelectronic technology, digital signal processing (DSP) or application specific integrated circuit (ASIC) cannot implement too complex real time processing within such short time period. Facing with the conflict said above, under this mobile communication environment, simple and real time algorithm of smart antenna not only cannot solve the multipath propagation problem, but also cannot thoroughly solve system capacity problem of CDMA mobile communication system.

On the other hand, in order to solve interference problem of multipath propagation, people deeply study technologies such as Rake receiver and Joint Detection or said Multi User Detection and use them in mobile communication system of Code Division Multiple Access widely. Nevertheless, the Rake receiver or multiuser detection technology, said above, cannot be directly used in mobile communication system with smart antenna. The main reasons are: multiuser detection technology processes CDMA signal of multiple code channels, after channel estimation and matched filter, all user data are once solved with inverse matrix, but for smart antenna technology, it makes beam forming for each code channel separately, it is difficult to use diversity advantage brought in by user multipath; Rake receiver technology composes user main multipath component, but it destroys phase relationship between antenna units of antenna array, also with limitation of Rake receiver principle, user number is same as spread spectrum coefficient, this makes it impossible to work at full code channel circumstances.

There is a two-dimensional smart antenna technology, but it is in a research stage and its algorithm is immature and complex.

There is another method which processes multiuser detection after using smart antenna; but at this time as each code channel has been separated, processing must be separated for each code channel; the result is that not only cannot fully bring multiuser detection function into play, but also greatly increase complexity of baseband signal processing.

EP 0849888 discloses an interference canceller for use in a multibeam-antenna CDMA communication system. Bach stage of the system includes an interference canceller unit which has a replica signal generator which generates a first interference replica signal from an input beam signal.

SUMMARY OF THE INVENTION

In order to have higher system capacity and better performance for CDMA wireless communication system, it is necessary to search for a simple and real time interference cancellation method convenient for use in CDMA wireless communication based on smart antenna.

Therefore, an object of the invention is to provide a baseband processing method based on smart antenna and interference cancellation. By designing a new digital signal processing method, CDMA mobile communication system or other wireless communication system, which use the method, can use smart antenna and solve multipath propagation interference at the same time.

A further object of the invention is to provide a set of new digital signal processing methods, which can be used in CDMA mobile communication system or other wireless communication system, and can solve various multipath propagation interference while using smart antenna.

According to the invention, there is provided a baseband method as set out in Claim 1. Preferred features of the invention are set out in Claims 2 to 10.

In the present invention beam forming of every multipath within searching window length is made for every channel, useful signals are picked and accumulated; so advantages of space diversity and time diversity are mostly utilized; in this way even in a severe multipath interference and white noise interference condition, better result can also be got. Calculation volume of the method is limited and can be implemented with commercial chips such as digital signal processor (DSP) or field programmable gate array (FPGA).

The method of present invention mainly points to wireless communication system of code division multiple access including time division duplex (TDD) and frequency division duplex (FDD).

### Brief Description of the Drawings

Figure 1 is base station structure diagram of wireless communication with smart antenna.

Figure 2 is an implementing skeleton diagram of smart antenna and interference cancellation method.

Figure 3 is an implementing flow chart of smart antenna and interference cancellation method.

### Embodiments of the invention

With embodiment and drawings, the invention is described in detail in the following.

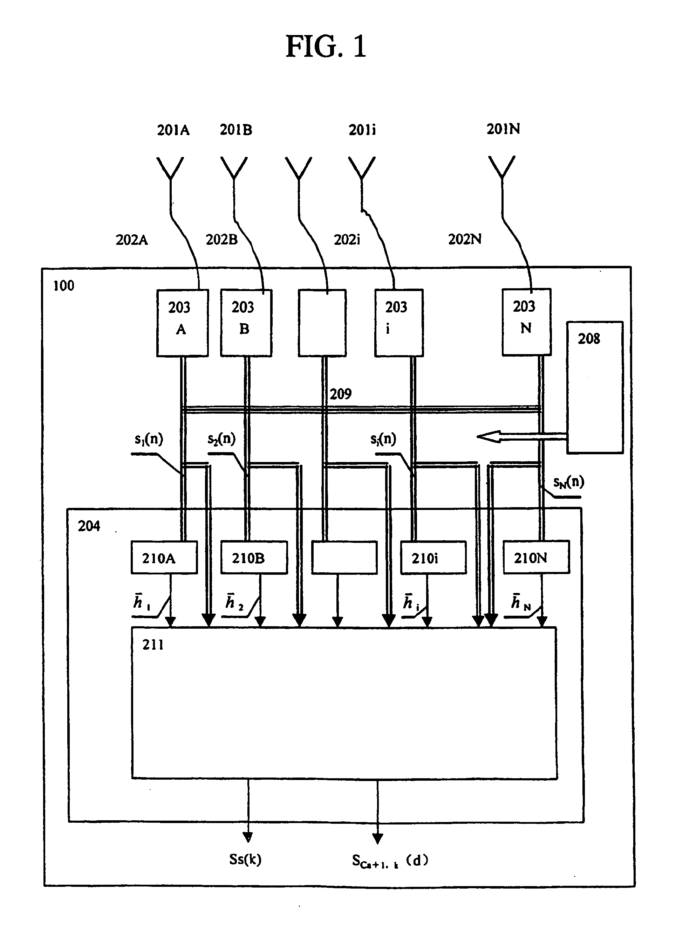

Referencing to Fig. 1, the systems concerned by the invention are mobile communication system with smart antenna and interference cancellation or wireless communication system such as wireless user loop system. Fig. 1 shows a base station structure of the system. It mainly includes N identical antenna units 201A, 201B, ..., 201i, ..., 201N; N almost identical feeder cable 202A, 202B, ..., 202i, ..., 202N; N radio frequency transceiver 203A, 203B, ..., 203i, ..., 203N and a baseband processor 204. All transceivers 203 use a same local oscillator 208 to guarantee that each radio frequency transceiver works in coherence. There are Analog to Digital Converter (ADC) and Digital to Analog Converter (DAC) in each radio frequency transceiver, so all baseband input and output of radio frequency transceiver 203 are digital signal; they are connected with baseband processor by a high speed digital bus 209. In Fig. 1, block 100 shows base station devices.

The invention only discusses interference cancellation of receiving signal in baseband processing shown in Fig. 1, without considering transmitting signal processing. Smart antenna implementation and interference cancellation is performed in baseband processor 204.

Suppose the CDMA wireless communication system has $K$ designed channels, smart antenna system is consisted of $N$-antenna units, $N$ feeder cables and $N$ radio frequency transceivers, i.e. $N$ links. In each receiving link, after sampling by ADC in radio transceiver, its output digital signals are $S_1(n)$, $S_2(n)$, ..., $S_1(n)$, ..., $S_N(n)$, where $n$ is $n$th chip. Taking $i$th receiving link as an example, after sampling its receiving signal by ADC in 203i radio frequency transceiver, its output digital signal is $S_1(n)$, which is input signal for baseband processor 204. Baseband processor 204 includes channel estimation module 210A, 210B, ..., 210i, ..., 210N, which correspond to $N$ radio frequency transceiver 203A, 203B, ..., 203i, ..., 203N of $N$ links respectively, and smart antenna interference cancellation module 211; output digital signals of $N$ links $S_1(n)$, $S_2(n)$, ..., $S_1(n)$, ..., $S_N(n)$ are sent to channel estimation module 210A, 210B, ..., 210i, ..., 210N respectively, they are also sent to smart antenna interference cancellation module 211; channel response signals $\overline{h}_1, \overline{h}_2, .... \overline{h}_1, ...\overline{h}_N$ which correspond to outputs of channel estimation module 210A, 210B, ..., 210i, ..., 210N respectively, are sent to smart antenna interference cancellation module 211; smart antenna interference cancellation module 211 outputs synchronous adjustment parameter $S_2,(K)$ to down link transmitting module and outputs interference cancellation result $S_{ca+I,k}(d)$ to channel decode module, where $\overline{h}_I = [h_{I,1}, h_{I,2},..., h_{I,k}]$.

When $S_1(n)$ enter channel estimation module 210i, with a beforehand known training sequence (Pilot or Midamble), $K$ channels are estimated and $K$ channels pulse response $h_{i,k}$ are got, where $i$ shows $i$th antenna unit and $k$ shows $k$th channel.

The specific processing procedure is as following. Suppose $k$th user's known training sequence is $m_k$, received training sequence from $i$th antenna is $e_I$, then there is formula (1):

$$e_i(n) = \sum_{k=1}^{K} \sum_{w=1}^{W} m_k(n-w+1) h_{i,k}(w) + n_{oi} \qquad (1)$$

where n is $n^{th}$ chip, $w$ is length of searching window and $n_{ol}$ is whits noise received from $i^{th}$ antenna. Formula (1) can be further rewritten as formula (2):

$$e_i = G h_{i,k} + n_{oi} \qquad (2)$$

then, channel estimation can be shown as formula (3):

$$h_{i,k} = (G^{*T} G)^{-1} G^{*T} e_i = M_{ii} \qquad (3)$$

where $M$ is a matrix, which only relates with every user training sequence and can be calculated and stored in advance; as it is unnecessary to calculate it in real time, channel estimation will be greatly speeded up.

According to procedure above, responses of all users in all channels can be calculated respectively, the results $h_{l,k}$ are inputted to smart antenna interference cancellation module 211; after further processing, all user signal will be recovered.

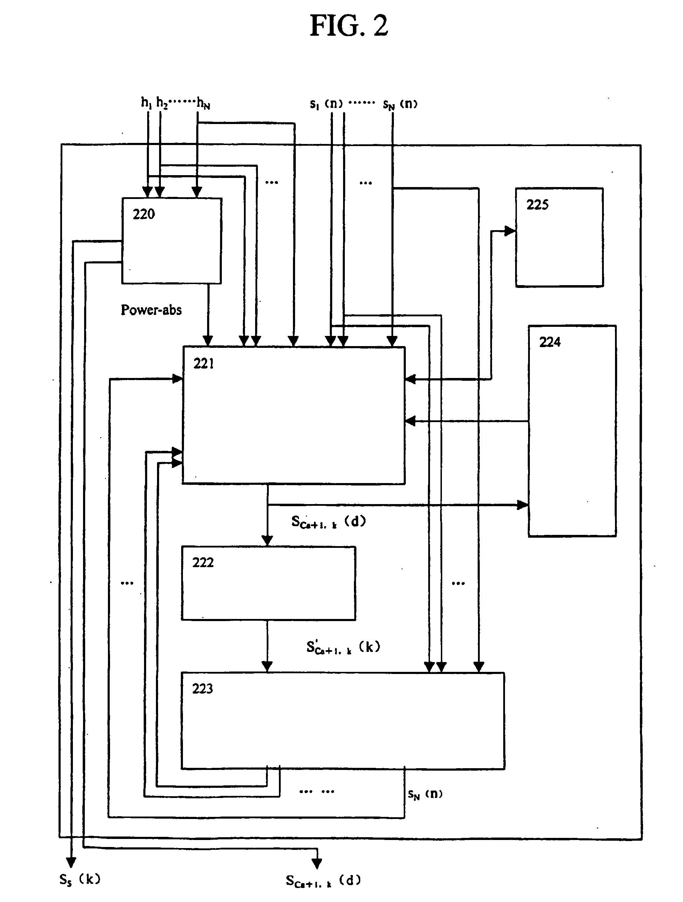

Referencing to Fig. 2, it shows interference cancellation processing of smart antenna interference cancellation module 211. First, channel response $h_{i,k}$, calculated by channel estimation module 210i, is sent to power estimation module 220 to estimate power; main path and multipath power distribution of $K$ users (with $K$ channels) in searching window are calculated, it is shown with formula (4):

$$power\_user_k(m) = \sum_{i=1}^{N} abs(h_{i,k}(m)) \qquad (4)$$

Then, maximum peak power point of each user is calculated; if a user most powerful path is not at the same point of other users most powerful path, then it means that the user does not synchronize with base station; the base station will inform the user in down link channel to adjust in order to keep synchronization with other users; adjustment parameter is $S_r(K)$ said above.

And then, $k^{th}$ user main path and multipath total power distribution in searching window is calculated, it is shown with formula (5):

$$power\_abs(m) = \sum_{i=1}^{N} \sum_{k=1}^{K} abs(h_{i,k}(m)) \qquad (5)$$

where $m$ is a point in searching window, the *power_abs* is sent to signal generator 221 to generate signal; at the same time, signals, sent to signal generator 221, also have channel response signal $\bar{h}_1, \bar{h}_2, ... \bar{h}_i, ... \bar{h}_N$ (vector), outputted by each channel estimation module 210A, 210B, ..., 210i, .... 210N respectively, and output digital signal $S_1(n), S_2(n) ..., s_i(n), ..., s_N(n)$ of N links.

In signal generator 221, first, a position of peak value point in *power_abs* is calculated and stored in *power_point*; at the same time, *set power_abs (power_point) = 0* to make it is unnecessary to calculate this point when making next interference; then, de-spread result of all signals at this point is got with smart antenna algorithm on the *power_point*; it is shown with formula (6):

$$S_{ca+1,k}(d) = \sum_{i=1}^{N} h^{*}_{i,k} \sum_{q=1}^{Q} S_{i}((d-1)Q+q)C_{q,k}pn\_code(l) + S_{ca,k}(d) \qquad (6)$$

where $C_{q,k}$ is $k^{th}$ user spread spectrum code, $pn\_code(l)$ is scramble code, $S_{ca,t}(d)$ is interference cancellation result of last time, initial value $S_{0,k}(d) = 0$ and output $S_{ca+1,k}(d)$ is symbolic level. Obviously, as users are not totally synchronized and there are severe multipath interference and white noise in system, $S_{ca+1,k}(d)$ is a rough result, at initial.

$S_{ca+1,k}(d)$ is sent to signal/noise ratio estimating module 224 and signal reconstructing module 222. Function of signal/noise ratio estimating module 224 is to estimate each user signal/noise ratio; signal generated by signal generator 221 is a descrambled, de-spread and demodulated signal; at this time, there are many methods to estimate each user signal/noise ratio, one of them is: for $k^{th}$ user, calculate its power first, it is shown with formula (7):

$$power\_K = \sum_{d=1}^{D} abs^{2}(S_{k}(d)) \qquad (7)$$

If the power is greater than a certain field value, then it is known as effective power; for all the signals with effective power calculate its square difference on correspond point of constellation map; if the square difference is greater than preset value, then signal/noise ratio of this user is comparatively low and its $S_{ca+1,k}(d)$ value is unbelievable, so interference cancellation is needed; on the contrary, if the square difference is less than preset value, then signal/noise ratio of this user is comparatively high and its $S_{ca+1,k}(d)$ value is believable, so interference cancellation is unneeded. Purpose of using signal/noise ratio estimating module is to simplify calculation of interference cancellation, as it is unnecessary to cancel interference for believable signal.

Signal reconstructing module 222 uses $S_{ca+1,k}(d)$ to reconstruct the original signal, which is chip level and shown with formula (8):

$$S_{ca+1,k}(Q(d-1)+q) = S_{ca+1,k}(d)C_{q,k}pn\_code(l) \qquad (8)$$

Then, calculate components of $K$ users on $N$ antennas, it is shown with formula (9):

$$S'_{ca+1,i}(n) = \sum_{k=1}^{K} S_{ca+1,k}(n)h^{*}_{i,k} \qquad (9)$$

The recovered results of $N$ antennas are sent to interference cancellation module 223 to cancel the interference, shown with formula (10):

$$S_{i}(n) = S_{i}(n) - S'_{ca+1,i}(n) \qquad (10)$$

In Fig. 2, function of deciding module 225 is used to decide when interference cancellation will be stopped with two deciding conditions: (1) signal/noise ratio of all signals are greater than set field value, (2) numbers of loop of interference cancellation reach set number, which is less or equal to length of search window and within this range numbers of loop are decided by processing capability of digital signal processor, FPGA chip and so on. When either of the two conditions is satisfied, processing procedure of interference cancellation method of smart antenna is ended and recovered signal $S_{ca+1,k}(d)$ is outputted.

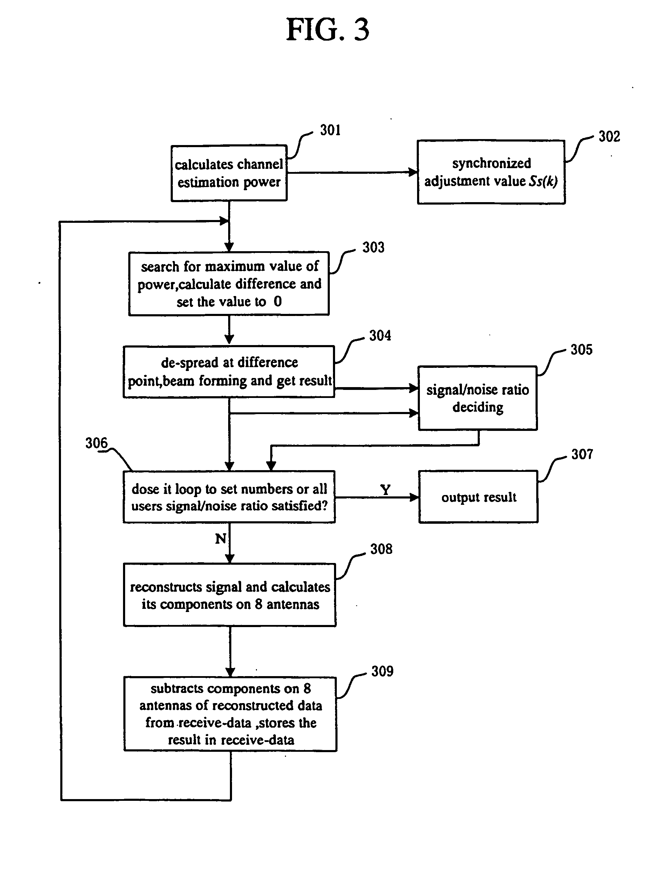

Referencing to Fig. 3, taking 8 antennas ($N = 8$) as an example to explain processing procedure of interference cancellation method for smart antenna.

Functional block 301 calculates channel estimation power by power estimating module 220; functional block 303 and 304 search for maximum value of power by signal generator module 221, calculate difference and set the value to 0, de-spread it at its difference point and make beam forming, then the result is sent, at the same time, to signal/noise ratio decision module 225 and signal reconstructing module 222 (through decision module 225); functional block 302 sends synchronized adjustment value $S_s(k)$; functional block 308 reconstructs signal and calculates its components on these 8 antennas; functional block 309 subtracts components on 8 antennas of reconstructed data from receive_data, stores the result in receive_data, then functional block 303 to functional block 309 is executed repeatedly. When functional block 305 decides magnitude of signal/noise ratio by signal/noise ratio decision module 224, and functional block 306 decides, by decision module 225, numbers of loop have reached set value or all users signal/noise ratio has been satisfied, then interference cancellation is ended and functional block 307 outputs recovered signal.

The invention mainly points CDMA wireless communication system including time division duplex (TDD) and frequency division duplex (FDD) CDMA wireless communication system. Any engineer, who works on development of wireless communication system, has knowledge of smart antenna principle and digital signal processing, can use method of the invention to design a high-qualified smart antenna system, which can be used on various mobile communication or wireless user loop system with high performance.

**Claims**

1. A baseband processing method based on smart antenna and interference cancellation, wherein an antenna unit (201A, 201B,...201N), corresponding feeder cable (202A, 202B,...202N) and coherent radio frequency transceiver (203A, 203B,...203N) together formed a link, the method comprising the step of

   A. estimating all channel responses for each link with a matrix relating to each user training sequence, the method being **characterized by** the further steps of:
   B. making power estimation for all channel responses; calculating each user main path and multipath power distribution in a searching window; calculating each user maximum peak value power point; making synchronization adjustment for a user whose most powerful path is not at the same point of other users and is not synchronized with base station; and calculating total power distribution of all users in the searching window;
   C. detecting a position of current maximum peak value power point in said total power distribution, and not calculating the position again when making text interference cancellation;
   D. obtaining current de-spread signal in the position of current maximum peak value power point by using a smart antenna beam forming algorithm on the point, and adding interference cancellation result of last time to the current de-spread signal, then obtaining a recovery signal;
   E. judging whether the recovery signal needs interference cancellation and, if yes, turning to step F, otherwise outputting the recovery signal and ending;
   F. making data reconstructing for the recovery signal and calculating receiving signal component of each antenna unit; and
   G. subtracting the receiving signal component of each antenna unit from the sampled-data signal, respectively, and then obtaining the sampled-data signal removed current most powerful path signal, returning to step C.

2. A method according to claim 1, wherein the matrix relating to each user training sequence is calculated and stored beforehand.

3. A method according to claim 1, wherein the step C further comprises: storing the position of maximum peak value power in a store memory.

4. A method according to claim 1, wherein the synchronization adjustment in step B comprises: sending adjustment parameter of synchronization to a transmitting module of that user whose most powerful path is not at the same point of other users and is not synchronized with base station.

5. A method according to claim 1, wherein the judging in step B is done by detecting whether a condition on the signal/noise ratio is satisfied; the step D further comprises: the estimation of the signal/noise ratio for the recovery signal.

6. A method according to claim 5, wherein the step of detecting whether the signal/noise ratio is satisfied comprises: calculating user power for the recovery signal; deciding that power greater than certain field value is effective power; calculating square difference for all signals with effective power at their corresponding constellation map point; deciding that recovery signals have low signal/noise ratio if their square difference is greater than a preset value, and have high signal/noise ratio if their square difference is less than a preset value.

7. A method according to claim 1, therein the judging in step E is done by detecting whether interference cancellation loop counter reaches a preset number.

8. A method according to claim 9, wherein the maximum interference cancellation loop counter is equal to length of the searching window.

9. A method According to claim 1, wherein the step of not calculating again the position of current maximum peak value during next interference cancellation comprises: setting to zero the power value in the position of current maximum peak value power.

10. A method according to claim 1, wherein the step D is implemented by follow formula:

$$S_{ca+1,k}(d) = \sum_{i=1}^{N} h^{*}_{i,k} \sum_{q=1}^{Q} S_i((d-1)Q+q)C_{q,k}\,pn\_code(l) + S_{ca,k}(d)$$

where $h^{*}_{i,k}$ is the complex conjugate of the channel coefficients, $S_i$ is the received digital signal for each link, $C_{q,k}$ is $k^{th}$ user spread spectrum code, $pn\_code(l)$ is scramble code, $S_{ca,k}(d)$ is interference cancellation result of last iteration, initial value $S_{0,k}(d) = 0$ and output $S_{ca+l,k}(d)$ is symbolic level.

**Patentansprüche**

1. Basisband-Verarbeitungsverfahren, basierend auf intelligenter Antenne und Interferenzauslöschung, wobei eine Antenneneinheit (201A, 201B, ... 201N), ein korrespondierendes Zuführungskabel (202A, 202B, ... 202N) und ein kohärenter Hochfrequenzempfänger (203A, 203B, ... 203N) zusammen eine Verbindung bilden, das Verfahren den folgenden Schritt umfassend

A. Ermitteln aller Kanalantworten für jede Verbindung mit einer Matrix, die zu jeder Benutzertrainingssequenz in Beziehung steht,
das Verfahren **gekennzeichnet durch** die folgenden weiteren Schritte:
B. Vornehmen einer Leistungsermittlung für alle Kanalantworten; Berechnen jeder Benutzer-Hauptweg- und -Mehrweg-Leistungsverteilung in einem Suchfenster; Berechnen jedes maximalen Benutzerspitzenwert-Leistungspunkts; Durchführen einer Synchronisationsanpassung für einen Benutzer, dessen leistungsstärkster Weg nicht an dem gleichen Punkt von anderen Benutzern ist und nicht mit der Basisstation synchronisiert ist; und Berechnen der gesamten Leistungsverteilung von allen Benutzern in dem Suchfenster;
C. Detektieren einer Position des gegenwärtigen maximalen Spitzenwert-Leistungspunkts in der gesamten Leistungsverteilung und kein erneutes Berechnen der Position bei der Durchführung der nächsten Interferenzauslöschung;
D. Erlangen des gegenwärtigen Entspreizungssignals in der Position des gegenwärtigen maximalen Spitzenwert-Leistungspunkts **durch** Verwendung eines Intelligent-Antenne-strahlbildungs-Algorithmus an dem Punkt, und Hinzufügen des Interferenzauslöschungs-Ergebnisses des letzten Mals zu dem gegenwärtigen Entspreizungssignal, dann Erlangen eines Wiederherstellungssignals;
E. Entscheiden, ob das Wiederherstellungssignal Interferenzauslöschung erfordert, und wenn ja, Fortfahren mit Schritt F, anderenfalls Ausgeben des Wiederherstellungssignals und Beenden;
F. Durchführen von Datenrekonstruktion für das Wiederherstellungssignal und Berechnen der Empfangssignalkomponente jeder Antenneneinheit; und
G. jeweils Subtrahieren der Empfangssignalkomponente jeder Antenneneinheit von dem Signal der abgetasteten Daten und dann Erlangen des gegenwärtigen leistungsstärksten Wegsignals mit dem entfernten Signal der abgetasteten Daten, Zurückkehren zu Schritt C.

2. Verfahren nach Anspruch 1, wobei die Matrix, die zu jeder Benutzertrainingssequenz in Beziehung steht, im Voraus berechnet und gespeichert wird.

3. Verfahren nach Anspruch 1, wobei der Schritt C weiter umfasst: Speichern der Position der maximalen Spitzenwertleistung in einem Speicher.

**4.** Verfahren nach Anspruch 1, wobei die Synchronisationsanpassung in Schritt B umfasst: Senden des Anpassungsparameters der Synchronisation an ein Übertragungsmodul des Benutzers, dessen leistungsstärkster Weg nicht an dem gleichen Punkt von anderen Benutzern ist und nicht mit der Basisstation synchronisiert ist.

**5.** Verfahren nach Anspruch 1, wobei das Entscheiden in Schritt B durchgeführt wird durch Detektieren, ob eine Bedingung des Signal/Rausch-Verhältnisses erfüllt ist; der Schritt D weiter umfasst: das Ermitteln des Signal/Rausch-Verhältnisses für das wiederhergestellte Signal.

**6.** Verfahren nach Anspruch 5, wobei der Schritt des Detektierens, ob das Signal/Rausch-Verhältnis erfüllt wird, umfasst: Berechnen der Benutzerleistung für das wiederhergestellte Signal; Entscheiden, dass Leistung größer als ein bestimmter Feldwert effektive Leistung ist; Berechnen der Quadratdifferenz für alle Signale mit effektiver Leistung an ihrem korrespondierenden Konstellationsabbildungspunkt; Entscheiden, dass Wiederherstellungssignale ein niedriges Signal/Rausch-Verhältnis haben, wenn ihre Quadratdifferenz größer als ein voreingestellter Wert ist, und ein hohes Signal/Rausch-Verhältnis haben, wenn ihre Quadratdifferenz kleiner als ein voreingestellter Wert ist.

**7.** Verfahren nach Anspruch 1, wobei das Entscheiden in Schritt E durchgeführt wird durch Detektieren, ob ein Interferenzauslöschungs-Schleifenzähler eine voreingestellte Zahl erreicht.

**8.** Verfahren nach Anspruch 9, wobei der maximale Interferenzauslöschungs-Schleifenzähler gleich der Länge des Suchfensters ist.

**9.** Verfahren nach Anspruch 1, wobei der Schritt, die Position des gegenwärtigen maximalen Spitzenwerts während der nächsten Interferenzauslöschung nicht wieder zu berechnen, umfasst: den Leistungswert in der Position der gegenwärtigen maximalen Spitzenwertleistung auf null zu setzen.

**10.** Verfahren nach Anspruch 1, wobei der Schritt D durch die folgende Formel implementiert wird:

$$S_{ca+1,k}(d) = \sum_{i=1}^{N} h^*_{i,k} \sum_{q=1}^{Q} S_i((d-1)Q+q) C_{q,k}\, pn\_code(l) + S_{ca,k}(d)$$

wobei $h^*_{i,k}$ die komplexe Konjugierte der Kanalkoeffizienten ist, $S_i$ das empfangene digitale Signal für jede Verbindung ist, $C_{q,k}$ der k-te Benutzerspreizspektrumscode ist, *pn_code(l)* der Verwürfelungscode ist, $S_{ca,k}(d)$ das Interferenzauslöschungsergebnis der letzten Iteration ist, der Anfangswert $S_{0,k}(d) = 0$ und der Ausgang $S_{ca+l,k}(d)$ ein symbolisches Niveau ist.

**Revendications**

**1.** Procédé de traitement de bande de base faisant intervenir une antenne intelligente et l'annulation des interférences, dans lequel une unité d'antenne (201A, 201B,...201N), un câble d'alimentation correspondant (202A, 202B,...,202N) et un émetteur-récepteur radiofréquence cohérent (203A, 203B,...203N) forment conjointement une liaison, le procédé comprenant l'étape consistant à

A. estimer toutes les réponses de canal pour chaque liaison avec une matrice en rapport à la séquence d'apprentissage de chaque utilisateur,
le procédé étant **caractérisé par** les étapes supplémentaires consistant à :
B. effectuer une estimation de puissance pour toutes les réponses de canal ; calculer la répartition de puissance de trajet principal et multitrajet de chaque utilisateur dans une fenêtre de recherche ; calculer le point de puissance de valeur crête maximale de chaque utilisateur ; effectuer un ajustement par synchronisation pour un utilisateur dont le trajet le plus puissant ne se trouve pas au même point que d'autres utilisateurs et n'est pas synchronisé avec la station de base ; et calculer la distribution de puissance totale de tous les utilisateurs dans la fenêtre de recherche ;
C. détecter une position d'un point de puissance de valeur crête maximale actuelle dans ladite distribution de puissance totale et ne pas calculer la position à nouveau au moment de l'annulation des interférences suivantes ;

D. obtenir un signal de désétalement actuel à la position du point de puissance de valeur crête maximale actuelle en utilisant un algorithme de formation de faisceau d'antennes intelligentes sur le point et ajouter le résultat d'annulation des interférences de la dernière fois au signal de désétalement actuel, obtenant ainsi un signal de récupération ;

E. juger si le signal de récupération nécessite une annulation d'interférence et si oui, passer à l'étape F, sinon sortir le signal de récupération et terminer ;

F. effectuer une reconstruction de données pour le signal de récupération et calculer la composante de signal de réception de chaque unité d'antenne ; et

G. soustraire la composante de signal de réception de chaque unité d'antenne du signal de données échantillonnées, respectivement, puis obtenir le signal de trajet le plus puissant actuel sans le signal de données échantillonnées, passer à l'étape C.

2. Procédé selon la revendication 1, dans lequel la matrice en rapport avec la séquence d'apprentissage de chaque utilisateur est calculée et stockée au préalable.

3. Procédé selon la revendication 1, dans lequel l'étape C comprend en outre : le stockage de la position de la puissance de valeur crête maximale dans une mémoire de stockage.

4. Procédé selon la revendication 1, dans lequel l'ajustement par synchronisation à l'étape B comprend : l'envoi d'un paramètre d'ajustement de synchronisation à un module d'émission de l'utilisateur dont le trajet le plus puissant n'est pas au même point que les autres utilisateurs et n'est pas synchronisé avec la station de base.

5. Procédé selon la revendication 1, dans lequel le jugement de l'étape B est effectué en détectant si une condition sur le rapport signal/bruit est satisfaite ; l'étape D comprenant en outre : l'estimation du rapport signal/bruit pour le signal de récupération.

6. Procédé selon la revendication 5, dans lequel l'étape consistant à détecter si le rapport signal/bruit est satisfait comprend : le calcul de la puissance d'utilisateur pour le signal de récupération ; la décision du fait qu'une puissance supérieure à une certaine valeur de champ est une puissance efficace ; le calcul d'une différence de carré pour tous les signaux ayant une puissance efficace au niveau de leur point de carte de constellation correspondant ; la décision du fait que les signaux de récupération présentent un rapport signal/bruit faible si leur différence de carré est supérieure à une valeur préétablie et présentent un rapport signal/bruit élevé si leur différence de carré est inférieure à une valeur préétablie.

7. Procédé selon la revendication 1, dans lequel le jugement de l'étape E est effectué par une détection du fait qu'un compteur de boucle d'annulation d'interférence atteint ou non un nombre préétabli.

8. Procédé selon la revendication 9, dans lequel le compteur de boucle d'annulation d'interférence est égal à la longueur de la fenêtre de recherche.

9. Procédé selon la revendication 1, dans lequel l'étape consistant à ne pas calculer à nouveau la position de la valeur crête maximale actuelle au cours de l'annulation d'interférence suivante comprend : le réglage à zéro de la valeur de puissance à la position de puissance de valeur crête maximale actuelle.

10. Procédé selon la revendication 1, dans lequel l'étape D est mise en oeuvre par la formule suivante :

$$S_{ca+1,k}(d) = \sum_{i=1}^{N} h^*_{i,k} \sum_{q=1}^{Q} S_i((d-1)Q+q)C_{q,k} \, pn\_code(l) + S_{ca,k}(d)$$

où $h^*_{i,k}$ est le conjugué complexe des coefficients de canal, $S_i$ est le signal numérique reçu pour chaque liaison, $C_{q,k}$ est le $K^{th}$ code de spectre d'étalement d'utilisateur, $pn\_code(l)$ est un code de brouillage, $S_{ca,k}(d)$ est le résultat d'annulation d'interférence de la dernière itération, la valeur initiale $S_{0,k}(d) = 0$ et la sortie $S_{ca+1,k}(d)$ est un niveau symbolique.

# FIG. 1

# FIG. 2

$h_1 \, h_2 \cdots\cdots h_N$

$s_1 \, (n) \, \cdots\cdots \, s_N \, (n)$

220

225

Power-abs

224

221

$S_{Ca+1, \, k} \, (d)$

222

$S'_{Ca+1, \, k} \, (k)$

223

$s_N \, (n)$

$S_s \, (k)$

$S_{Ca+1, \, k} \, (d)$

# FIG. 3

```
┌─────────────────────┐              ┌─────────────────────┐
│  calculates channel │─── 301       │    synchronized     │─── 302
│  estimation power   │─────────────▶│ adjustment value Ss(k)│
└─────────────────────┘              └─────────────────────┘
           │
           ▼
┌─────────────────────┐
│ search for maximum value of │─── 303
│ power,calculate difference and │
│      set the value to  0       │
└─────────────────────┘
           │
           ▼
┌─────────────────────┐              ┌─────────────────────┐
│  de-spread at difference │─── 304  │  signal/noise ratio │─── 305
│ point,beam forming and get result│─▶│      deciding      │
└─────────────────────┘              └─────────────────────┘
           │
   306     │
           ▼
┌─────────────────────┐      Y       ┌─────────────────────┐
│ dose it loop to set numbers or all │───────▶│   output result   │─── 307
│ users signal/noise ratio satisfied?│        └─────────────────────┘
└─────────────────────┘
           │ N
           ▼
┌─────────────────────┐
│ reconstructs signal and calculates │─── 308
│   its components on 8 antennas     │
└─────────────────────┘
           │
           ▼
┌─────────────────────┐
│ subtracts components on 8 │─── 309
│ antennas of reconstructed data │
│ from receive-data ,stores the  │
│    result in receive-data      │
└─────────────────────┘
```

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 97104039

- EP 0849888 A